# EUROPEAN PATENT SPECIFICATION

(11) **EP 0 296 687 B1**
(45) Date of publication and mention of the grant of the patent: **02.02.1994**
(21) Application number: 88201282.6
(22) Date of filing: 21.06.1988
(51) Int. Cl.: C08G 67/02, B01J 31/18, C07F 9/50

(54) **Catalyst compositions**
Katalysatorzusammensetzungen
Compositions de catalyseur

(30) Priority: 24.06.1987 NL 8701473
(43) Date of publication of application: 28.12.1988
(73) Proprietor: SHELL INTERNATIONALE RESEARCH MAATSCHAPPIJ B.V., 2596 HR Den Haag (NL)
(72) Inventor: Van Doorn, Johannes Adrianus, NL-1031 CM Amsterdam (NL); Wife, Richard Lewin, NL-1031 CM Amsterdam (NL)

(56) References cited:
- EP-A- 0 222 454
- GB-A- 2 014 138

## Description

The invention relates to novel compositions suited to be used as catalysts in the preparation of polymers of carbon monoxide with one or more olefinically unsaturated compounds.

High molecular weight linear polymers of carbon monoxide with one or more olefinically unsaturated compounds (for the sake of brevity referred to as A) in which the monomer units occur in alternating order and which polymers therefore consist of units of the general formula -(CO)-A'-, wherein A' represents a monomer unit derived from a monomer A used, can be prepared by a process as described in European patent application No. 0222454, wherein catalyst compositions are employed based upon:
a) a palladium compound,
b) an anion of an acid with a pKa of less than 6, and
c) a compound of the general formula R₁R₂M₁-R₅-M₂R₃R₄, wherein M₁ and M₂ represent similar or different elements chosen from the group made up of arsenic, antimony, phosphorus and nitrogen, wherein R₁, R₂, R₃ and R₄ represent similar of different hydrocarbon groups which may optionally be substituted with polar groups and wherein R₅ is a bivalent bridging group in which the bridge contains only three carbon atoms, the middle carbon atom of which forms part of a -CH₂- group.

In the afore-mentioned polymer preparation, both polymerisation rates and the molecular weights of the polymers obtained play an important role. On the one hand it is desirable to attain the highest possible polymerization rate during the polymer preparation, whilst on the other hand the polymers are more valuable with a view to their uses, as they have higher molecular weights. Both polymerization rates and molecular weights can be influenced by the temperature employed during polymerization. Unfortunately, the effects which the temperature has on polymerization rates and on molecular weights are opposed to one another, in that at otherwise similar reaction conditions, an increase in the reaction temperature will lead to a rise in polymerization rate but a decrease in the molecular weights of the polymers obtained.

The Applicant has carried out an investigation into the afore-mentioned catalyst compositions. This has surprisingly shown that their performance can be considerably enhanced by incorporating as component c) a compound of the general formula R₁R₂M₁-R₆-M₂R₃R₄, wherein R₆ is a bivalent bridging group in which the bridge contains only three carbon atoms, the middle carbon atom of which forms part of a -CR₇R₈-group, wherein R₇ and R₈ represent similar or different monovalent substituents comprising exclusively carbon, hydrogen and optionally oxygen. Comparison of the performance of the original catalyst compositions comprising a compound of the general formula R₁R₂M₁-R₅-M₂R₃R₄ as component c), with that of the modified catalyst compositions comprising a compound of the general formula R₁R₂M₁-R₆-M₂R₃R₄ as component c), shows that at similar polymerization rates for both compositions, the use of the modified compositions results in polymers with higher molecular weights and, conversely, that when the two compositions are used to prepare polymers of similar molecular weights, the modified compositions show higher polymerization rates.

The present patent application therefore relates to catalyst compositions based upon
a) a palladium compound,
b) an anion of an acid with a pKa of less than 6, and
c) a compound of the general formula R₁R₂M₁-R₆-M₂R₃R₄, wherein M₁ and M₂ represent similar or different elements chosen from the group made up of arsenic, antimony, phosphorus and nitrogen, wherein R₁, R₂, R₃ and R₄ represent similar of different hydrocarbon groups which may optionally be substituted with polar groups and wherein R₆ is a bivalent bridging group in which the bridge contains only three carbon atoms, the middle carbon atom of which forms part of a -CR₇R₈- group in which R₇ and R₈ are similar or different monovalent substituents exclusively comprising carbon, hydrogen and optionally oxygen.

The palladium compound used in the catalyst compositions as component a) is preferably a palladium salt of a carboxylic acid and in particular palladium acetate. The preferred component b) in the catalyst compositions is an anion of an acid with a pKa of less than 4 (determined in aqueous solution at 18°) and in particular an anion of an acid with a pKa of less than 2. More specifically, preference is given to an anion of a sulphonic acid, such as para-toluenesulphonic acid or an anion of a carboxylic acid, such as trifluoro acetic acid. In the catalyst compositions, component b) is preferably present in a quantity of from 0.5 to 200 and in particular of from 1.0 to 100 equivalents per gram atom of palladium. Component b) may be taken up in the catalyst compositions in the form of an acid and/or in the form of a salt. Eligible salts include non-noble transition metal salts and in particular copper salts. If desired, components a) and b) may be used combined in a single compound. An example of such a compound is the complex Pd(CH₃CN)₂(O₃S-C₆H₄-CH₃)₂ which can be prepared by the reaction in acetonitrile of either palladium chloride with silver para-tosylate, or palladium acetate with para-toluenesulphonic acid.

In the compounds used as component c), M₁ and M₂ are preferably similar to one another. Particular preference is given to components c) wherein M₁ and M₂ both represent phosphorus. In the catalyst compositions, component c) is preferably present in a quantity of 0.1-2 and in particular of 0.75-1.5 mol per mol of palladium compound. The groups R₁, R₂, R₃ and R₄ present in the compounds used as components c) are preferably aryl groups which are optionally substituted with polar groups and in particular phenyl groups which are optionally substituted with polar groups and in particular phenyl groups which are optionally substituted with polar groups. Preferably, at least one of the groups R₁, R₂, R₃ and R₄ contains at least one polar substituent. Eligible polar substituents include dialkyl-amino groups, such as dimethyl-amino groups and alkoxy groups such as methoxy and tert.butoxy groups. Preference is given to alkoxy groups and in particular to methoxy groups as polar substituents. Preference is further given to components c) in which at least two of the groups R₁, R₂, R₃ and R₄ contain at least one polar substituent. Furthermore, preference is given to components c) in which the groups R₁, R₂, R₃ and R₄ are similar to one another by pairs, i.e. components c) in which R₁ = R₂ and R₃ = R₄ or components c) in which R₁ = R₃ and R₂ = R₄. Particular preference is given to components c) in which the groups R₁, R₂, R₃ and R₄ are similar to one another. If one or more of the groups R₁, R₂, R₃ and R₄ are aryl groups comprising one or more polar substituents, at least one of these polar substituents preferably occupies a position ortho with respect to the phosphorus atom to which the aryl group is attached. Examples of such polar-substituted aryl groups are the 2-methoxy-phenyl group and the 2,4-dimethoxy-phenyl group. Preference is given to components c) in which at least two, and more particularly all four, of the groups R₁, R₂, R₃ and R₄ are 2-methoxy-phenyl groups.

In the compounds of the general formula R₁R₂M₁-R₆-M₂R₃R₄ which are used as components c) in the catalyst compositions of the invention, R₆ represents a bivalent bridging group in which the bridge contains only three carbon atoms in the bridge, the middle carbon atom of which forms part of a -CR₇R₈- group in which R₇ and R₈ are monovalent substituents which are exclusively made up of carbon, hydrogen and optionally oxygen. In components c), the groups R₇ and R₈ may be similar or different. Groups R₇ and R₈ may for instance represent two different alkyl groups or two different aryl groups. Either one of the groups R₇ and R₈ may also represent an alkyl group while the other represents an aryl group. In addition to carbon and hydrogen, the groups R₇ and R₈ may include oxygen. Examples of such groups are alkyl-O-CH₂ groups, such as the CH₃-O-CH₂ group. If desired, the groups R₇ and R₈ which are interconnected through the central carbon atom of the propane chain, may include an additional bond, thus forming part of a cyclic structure together with the central carbon atom of the propane chain. Such a situation presents itself in components c) in which the groups R₇ and R₈ together form a -CH₂-CH₂-CH₂-CH₂- or a -CH₂-O-C(CH₃)₂-O-CH₂- group. Preference is given to components c) in which the bivalent bridging group R₆ is a -CH₂-CR₇R₈-CH₂- group and in which the groups R₇ and R₈ are similar to one another. Further, preference is given to components c) in which the groups R₇ and R₈ are alkyl groups and more particularly to components c) in which the groups R₇ and R₈ are both methyl groups. Compounds that are very suited to be used as components c) in the catalyst compositions of the invention are 2,2-dimethyl-1,3-bis(diphenyl-phosphino) propane, 2,2-dimethyl-1,3-bis(2-methoxy-phenyl,phenyl-phosphino) propane and 2,2-dimethyl-1,3-bis[di(2-methoxy-phenyl)-phosphino] propane.

In order to enhance the activity of the present catalyst compositions, it is preferred to incorporate a 1,4-quinone as a component d). In addition to optionally alkyl-substituted 1,4-benzoquinones, there are also other eligible 1,4-quinones, such as optionally alkyl-substituted 1,4-naphthoquinones. It is preferred to use 1,4-benzoquinone and 1,4-naphthoquinone as promoters. The quantity of 1,4-quinone used preferably amounts to 10-1000 mol and in particular 25-250 mol per gram atom of palladium.

The polymerization by using the catalyst compositions according to the invention is preferably carried out in a liquid diluent. Very suitable liquid diluents are lower alcohols, such as methanol and ethanol. The polymerization may also be performed in the gaseous phase, if desired.

Eligible olefinically unsaturated organic compounds that can be polymerized with carbon monoxide with the aid of the catalyst compositions according to the invention are both compounds consisting exclusively of carbon and hydrogen and compounds which, in addition to carbon and hydrogen, contain one or more hetero-atoms. The catalyst compositions according to the invention are preferably used for preparing polymers of carbon monoxide with one or more olefinically unsaturated hydrocarbons. Examples of suitable hydrocarbon monomers are ethene and other α-olefins, such as propene, butene-1, hexene-1 and octene-1, as well as styrene and alkyl-substituted styrenes, such as p-methyl styrene and p-ethyl styrene. The catalyst compositions according to the invention are especially suitable for use in the preparation of copolymers of carbon monoxide and ethene and in the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain 10⁻⁷-10⁻³, and in particular 10⁻⁶-10⁻⁴, gram atom of palladium.

The preparation of the polymers is preferably carried out at a temperature of 20-200 ° and a pressure of 1-200 bar and in particular at a temperatue of 30-150 ° and a pressure of 20-100 bar. In the mixture to be polymerized, the molar ratio of the olefinically unsaturated organic compounds relative to carbon monoxide is preferably 10:1-1:5 and in particular 5:1-1:2. The carbon monoxide used in the polymer preparation of the invention need not be pure. It may contain such contaminants as hydrogen, carbon dioxide and nitrogen.

According as the polymers prepared according to the invention have higher molecular weights, their intrinsic viscosities too will as a rule be higher. In order to determine the intrinsic viscosity of a polymer prepared according to the invention, solutions are prepared by dissolving the polymer in m-cresol at 100°. Hereinafter 'intrinsic viscosity' will be referred as 'Limiting Viscosity Number' (LVN), in accordance with the designation recommanded by the International Union of Pure and Applied Chemistry.

Examples 1, 2, 4, 6 and 8-10 are given for comparison and are outside the scope of the claims.

### Example 1

A carbon monoxide/ethene copolymer was prepared as follows. 200 ml of methanol was introduced into a mechanically stirred autoclave of 300 ml capacity. The air present in the autoclave was expelled therefrom by pressurizing the autoclave with carbon monoxide until a pressure of 50 bar was reached and then releasing the pressure and repeating this procedure twice over. After the contents of the autoclave had been brought to a temperature of 65°, a 1:1 carbon monoxide/ethene mixture was introduced into the autocalve until a pressure of 55 bar was reached. A catalyst solution was then introduced into the autoclave, consisting of:
6 ml of methanol,
0.02 mmol of palladium acetate,
0.04 mmol of para-toluenesulphonic acid and
0.02 mmol 1,3-bis(diphenyl-phosphino) propane.
The pressure was maintained at 55 bar by introducing under pressure a 1:1 carbon monoxide/ethene mixture. After 3 hours the polymerization was terminated by cooling the reaction mixture down to room temperature and releasing the pressure. The copolymer was filtered off, washed with methanol and dried at 70°.

In this way a copolymer having an LVN of 1.0 dl/g was prepared at a polymerization rate of 1.3 kg copolymer/g palladium/hour.

### Example 2

A carbon monoxide/ethene copolymer was prepared substantially in the same way as the copolymer of Example 1, except that now the temperature employed was 85° instead of 65°.

Thus, a copolymer having an LVN of 0.5 dl/g was prepared at a polymerization rate of 5.0 kg copolymer/g palladium/hour.

### Example 3

A carbon monoxide/ethene copolymer was prepared substantially in the same way as the copolymer of Example 1, except for the following differences:
a) the polymerization temperature was 85° instead of 65°, and
b) the component c) used was 2,2-dimethyl-1,3-bis(diphenyl-phosphino) propane instead of 1,3-bis(diphenyl-phosphino) propane.

Thus, a copolymer having an LVN of 0.5 dl/g was prepared at a polymerization rate of 8.4 kg copolymer/g palladium/hour.

### Example 4

A carbon monoxide/ethene copolymer was prepared substantially in the same way as the copolymer of Example 1, except for the following differences:
a) the polymerization temperature was 96° instead of 65°,
b) the component b) used was 0.4 mmol trifluoro acetic acid instead of 0.04 mmol of para-toluenesulphonic acid,
c) the component c) used was 1,3-bis(2-methoxy-phenyl,phenylphosphino) propane instead of 1,3-bis(diphenylphosphino) propane, and
d) the catalyst composition in addition included 4 mmol of 1,4-benzoquinone as component d).

Thus, a copolymer having an LVN of 0.7 dl/g was prepared at a polymerization rate of 3.5 kg copolymer/g palladium/hour.

### Example 5

A carbon monoxide/ethene copolymer was prepared substantially in the same way as the copolymer of Example 1, except for the following differences:
a) the polymerization temperature was 96° instead of 65°,
b) the component b) used was 0.4 mmol trifluoro acetic acid instead of 0.04 mmol of para-toluenesulphonic acid,
c) the component c) used was 2,2-dimethyl-1,3-bis(2-methoxy-phenyl,phenyl-phosphino) propane instead of 1,3-bis(diphenyl-phosphino) propane, and
d) the catalyst composition in addition included 4 mmol of 1,4-benzoquinone as component d).

Thus, a copolymer having an LVN of 0.7 dl/g was prepared at a polymerization rate of 9.3 kg copolymer/g palladium/hour.

### Example 6

A carbon monoxide/ethene copolymer was prepared substantially in the same way as the copolymer of Example 1, except for the following differences:
a) the polymerization temperature was 97° instead of 65°,
b) the component b) used was 0.4 mmol trifluoro acetic acid instead of 0.04 mmol of para-toluenesulphonic acid,
c) the component c) used was 1,3-bis[di(2-methoxy-phenyl)-phosphino] propane instead of 1,3-bis(diphenyl-phosphino) propane, and
d) the catalyst composition in addition included 4 mmol of 1,4-benzoquinone as component d).

Thus, a copolymer having an LVN of 1.0 dl/g was prepared at a polymerization rate of 12.2 kg copolymer/g palladium/hour.

### Example 7

A carbon monoxide/ethene copolymer was prepared substantially in the same way as the copolymer of Example 1, except for the following differences:
a) the polymerization temperature was 97° instead of 65°,
b) the component b) used was 0.4 mmol trifluoro acetic acid instead of 0.04 mmol of para-toluenesulphonic acid,
c) the component c) used was 2,2-dimethyl-1,3-bis[di(2-methoxy-phenyl)-phosphino] propane instead of 1,3-bis(diphenyl-phosphino) propane, and
d) the catalyst composition in addition included 4 mmol of 1,4-benzoquinone as component d).

Thus, a copolymer having an LVN of 0.9 dl/g was prepared at a polymerization rate of 20.0 kg copolymer/g palladium/hour.

### Example 8

A carbon monoxide/ethene copolymer was prepared substantially in the same way as the copolymer of Example 1, except for the following differences:
a) the polymerization temperature was 85° instead of 65°, and
b) the component c) used was 1,3-bis(diphenylphosphino) butane instead of 1,3-bis(diphenyl-phosphino) propane.

Thus, a copolymer having an LVN of 0.4 dl/g was prepared at a polymerization rate of 2.9 kg copolymer/g palladium/hour.

### Example 9

A carbon monoxide/ethene copolymer was prepared substantially in the same way as the copolymer of Example 1, except for the following differences:
a) the polymerization temperature was 85° instead of 65°,
b) the component c) used was 2,4-bis(diphenyl-phosphino) pentane instead of 1,3-bis(diphenyl-phosphino) propane.

Thus, a copolymer having an LVN of 0.4 dl/g was prepared at a polymerization rate of 5.6 kg copolymer/g palladium/hour.

### Example 10

A carbon monoxide/ethene copolymer was prepared substantially in the same way as the copolymer of Example 1, except for the following differences:
a) the polymerization temperature was 85° instead of 65°,
b) the component c) used was 2-(diphenyl-phosphino-methyl)-3-(diphenyl-phosphino) propene-1 instead of 1,3-bis(diphenyl-phosphino) propane.

Thus, a copolymer having an LVN of 0.5 dl/g was prepared at a polymerization rate of 5.4 kg copolymer/g palladium/hour.

In Examples 3, 5 and 7 use was made of catalyst compositions according to the invention which comprised a bisphosphine of the general formula R₁R₂P-CH₂-C(CH₃)₂-CH₂-PR₃R₄ as component c). The catalyst compositions according to the invention used in Examples 5 and 7 in addition comprised a 1,4-quinone as component d). in the preparation of which The catalyst compositions used in examples 1, 2, 4, 6 and 8-10, comprised a bisphosphine which did not satisfy the general formula R₁R₂P-R₆-PR₃R₄, fall outside the scope of the invention. They have been included in the patent application for comparison.

With the aid of ¹³C-NMR analysis it was established that the carbon monoxide/ethene copolymers prepared according to Examples 1-10 had a linear alternating structure and consisted therefore of units of the formula -(CO)-(C₂H₄)-. All the copolymers prepared according to Examples 1-10 had a melting point of 257°.

Comparison of Example 1 with Example 2 (both carried out using a catalyst composition comprising a bisphosphine which did not satisfy the general formula R₁R₂P-R₆-PR₃R₄) demonstrates the influence of the polymerization temperature both on polymerization rates and on the molecular weights of the ready copolymers.

The favourable effect of replacing a bisphosphine of the general formula R₁R₂P-CH₂-CH₂-CH₂-PR₃R₄ with a bisphosphine of the general formula R₁R₂P-CH₂-C(CH₃)₂-CH₂-PR₃R₄ is demonstrated by the comparison of Example 2 with Example 3, of Example 4 with Example 5 and of Example 6 with Example 7. Pairs of polymers having about the same molecular weights are prepared; however, when 2,2-dimethyl-substituted bisphosphines are used, the polymerization rates obtained are higher.

That two substituents should necessarily be present in component c) in the 2-position of the propane chain in order to obtain essential enhancement of the performance of the catalyst compositions, is demonstrated by the comparison of Example 2 with Examples 3 and 8-10. In Example 3 (2,2-dimethyl-substituted), a marked increase was seen in the polymerization rates, whilst Examples 8 (1-methyl-substituted), 9 (1,3-dimethyl-substituted) and 10 (2-methylene-substituted), showed no significant improvement or even decline in the performances of the catalyst compositions.

The diphosphines used in Examples 5, 7 and 10 as components c),
2,2-dimethyl-1,3-bis(2-methoxy-phenyl,phenyl-phosphino) propane, 2,2-dimethyl-1,3-bis[di(2-methoxy-phenyl)-phosphino] propane and 2-(diphenyl-phosphino-methyl)-3-(diphenyl-phosphino) propene-1, are novel compounds. They can be prepared by reacting a 1,3-dihalo-2,2-dimethyl propane with an alkali metal-2-methoxy-phenyl,phenyl-phosphide and an alkali metal-di(2-methoxy-phenyl) phosphide, respectively and by reacting 2-chloromethyl-3-chloro-propene-1 with an alkali metal-diphenyl phosphide.

## Claims (Claims for the following Contracting State(s): AT, BE, CH, DE, FR, GB, GR, IT, LI, NL, SE)

1. catalyst compositions, characterized in that they are based upon
a) a palladium compound,
b) an anion of an acid with a pKa of less than 6, and
c) a compound of the general formula R₁R₂M₁-R₆-M₂R₃R₄, wherein M₁ and M₂ represent similar or different elements chosen from the group made up of arsenic, antimony, phosphorus and nitrogen, wherein R₁, R₂, R₃ and R₄ represent similar or different hydrocarbon groups which may optionally be substituted with polar groups and wherein R₆ is a bivalent bridging group in which the bridge contains only three carbon atoms, the middle carbon atom of which forms part of a -CR₇R₈- group in which R₇ and R₈ are similar or different monovalent substituents exclusively comprising carbon, hydrogen and optionally oxygen.

2. Catalyst compositions as claimed in claim 1, characterized in that in component c) M₁ and M₂ each represent phosphorus.

3. Catalyst compositions as claimed in claim 1 or 2, characterized in that at least one of the groups R₁, R₂, R₃ and R₄ present in component c) is a phenyl group carrying at least one polar substituent.

4. Catalyst compositions as claimed in claim 3, characterized in that the polar group is an alkoxy group.

5. Catalyst compositions as claimed in one or more of claims 1-4, characterized in that the monovalent substituents R₇ and R₈ present in component c) are alkyl groups, preferably methyl groups.

6. Catalyst compositions as claimed in claim 5, characterized in that as component c) they comprise a diphosphine chosen from the group made up of2,2-dimethyl-1,3-bis(diphenyl-phosphino) propane, 2,2-dimethyl-1,3-bis(2-methoxy-phenyl,phenyl-phosphino) propane and 2,2-dimethyl-1,3-bis[di(2-methoxy-phenyl)-phosphino] propane.

7. Catalyst compositions as claimed in one or more of claims 1-6, characterized in that in addition they comprise a 1,4-quinone as component d).

8. Process for the preparation of polymers, characterized in that a mixture of carbon monoxide and one or more olefinically unsaturated organic compounds is polymerized by using a catalyst composition as claimed in any of claims 1-7.

9. As diphosphines:
2,2-dimethyl-1,3-bis(2-methoxy-phenyl,phenyl-phosphino) propane, 2,2-dimethyl-1,3-bis[di(2-methoxy-phenyl)-phosphino] propane and 2-(diphenyl-phosphino-methyl)-3-(diphenyl-phosphino) propene-1.

## Claims (Claims for the following Contracting State(s): ES)

1. A process for the preparation of catalyst compositions, characterized in that they are prepared by combining
a) a palladium compound,
b) an anion of an acid with a pKa of less than 6, and
c) a compound of the general formula R₁R₂M₁-R₆-M₂R₃R₄, wherein M₁ and M₂ represent similar or different elements chosen from the group made up of arsenic, antimony, phosphorus and nitrogen, wherein R₁, R₂, R₃ and R₄ represent similar or different hydrocarbon groups which may optionally be substituted with polar groups and wherein R₆ is a bivalent bridging group in which the bridge contains only three carbon atoms, the middle carbon atom of which forms part of a -CR₇R₈- group in which R₇ and R₈ are similar or different monovalent substituents exclusively comprising carbon, hydrogen and optionally oxygen.

2. A process as claimed in claim 1, characterized in that in component c) M₁ and M₂ each represent phosphorus.

3. A process as claimed in claim 1 or 2, characterized in that at least one of the groups R₁, R₂, R₃ and R₄ present in component c) is a phenyl group carrying at least one polar substituent.

4. A process as claimed in claim 3, characterized in that the polar group is an alkoxy group.

5. A process as claimed in one or more of claims 1-4, characterized in that the monovalent substituents R₇ and R₈ present in component c) are alkyl groups, preferably methyl groups.

6. A process as claimed in claim 5, characterized in that component c) is a diphosphine chosen from the group made up of 2,2-dimethyl-1,3-bis(diphenyl-phosphino) propane, 2,2-dimethyl-1,3-bis(2-methoxy-phenyl,phenyl-phosphino) propane and 2,2-dimethyl-1,3-bis[di(2-methoxy-phenyl)-phosphino] propane.

7. A process as claimed in one or more of claims 1-6, characterized in that a 1,4-quinone is used as an additional component d).

8. Process for the preparation of polymers, characterized in that a mixture of carbon monoxide and one or more olefinically unsaturated organic compounds is polymerized by using a catalyst composition prepared according to a process as claimed in one or more of claims 1-7.

9. A process for preparing diphosphines, characterized in that either 2,2-dimethyl-1,3-bis(2-methoxy-phenyl,phenyl-phosphino) propane is prepared by reacting a 1,3-dihalo-2,2-dimethyl-propane with an alkali metal-2-methoxyphenyl,phenyl-phosphide, or 2,2-dimethyl-1,3-bis[di(2-methoxy-phenyl)-phosphino] propane is prepared by reacting a 1,3-dihalo-2,2-dimethylpropane with an alkali metal-di(2-methoxy-phenyl)phosphide, or 2-(diphenyl-phosphino-methyl)-3-(diphenyl-phosphino) propene-1 is prepared by reacting 2-chloromethyl-3-chloro-propene-1 with an alkali metal-diphenyl phosphide.

## Patentansprüche (Patentansprüche für folgende(n) Vertragsstaat(en): AT, BE, CH, DE, FR, GB, GR, IT, LI, NL, SE)

1. Neue Katalysatorzusammensetzungen, dadurch gekennzeichnet, daß sie beruhen auf
a) einer Palladiumverbindung,
b) einem Anion einer Säure mit einem pKa-Wert von kleiner als 6 und
c) einer Verbindung der allgemeinen Formel R₁R₂M₁-R₆-M₂R₃R₄, worin M₁ und M₂ gleiche oder verschiedene Elemente, ausgewählt aus der aus Arsen, Antimon, Phosphor und Stickstoff bestehenden Gruppe, darstellen, R₁, R₂, R₃ und R₄ gleiche oder verschiedene Kohlenwasserstoffgruppen bedeuten, die gegebenenfalls durch polare Gruppen substituiert sein können, und R₆ eine zweiwertige Brückengruppe bezeichnet, worin die Brücke nur 3 Kohlenstoffatome enthält, deren mittleres Kohlenstoffatom Teil einer -CR₇R₈-Gruppe ist, worin R₇ und R₈ gleiche oder verschiedene einwertige, ausschließlich Kohlenstoff, Wasserstoff und gegebenenfalls Sauerstoff umfassende Substituenten sind.

2. Katalysatorzusammensetzungen nach Anspruch 1, dadurch gekennzeichnet, daß in der Komponente c) M₁ und M₂ jeweils Phosphor bedeuten.

3. Katalysatorzusammensetzungen nach Anspruch 1 oder 2, dadurch gekennzeichnet, daß wenigstens eine der in Komponente c) vorliegenden Gruppen R₁, R₂, R₃ und R₄ eine wenigstens einen polaren Substituenten tragende Phenylgruppe ist.

4. Katalysatorzusammensetzungen nach Anspruch 3, dadurch gekennzeichnet, daß die polare Gruppe eine Alkoxygruppe ist.

5. Katalysatorzusammensetzungen nach einem oder mehreren der Ansprüche 1 bis 4, dadurch gekennzeichnet, daß die in der Komponente c) vorliegenden Substituenten R₇ und R₈ Alkylgruppen, vorzugsweise Methylgruppen, sind.

6. Katalysatorzusammensetzungen nach Anspruch 5, dadurch gekennzeichnet,daß sie als Komponente c) ein Diphosphin, ausgewählt aus der aus 2,2-Dimethyl-1,3-bis(diphenylphosphino)propan,2,2-Dimethyl-1,3-bis(2-methoxyphenyl,phenyl-phospino)propan und 2,2-Dimethyl-1,3-bis[ di(2-methoxyphenyl)phosphino]propan bestehenden Gruppe, enthalten.

7. Katalysatorzusammensetzungen nach einem oder mehreren der Ansprüche 1 bis 6, dadurch gekennzeichnet, daß sie zusätzlich ein 1,4-Chinon als Komponente d) enthalten.

8. Verfahren zur Herstellung von Polymeren, dadurch gekennzeichnet, daß ein Gemisch aus Kohlenmonoxid mit einer oder mit mehreren olefinisch ungesättigten organischen Verbindungen unter Anwendung einer Katalysatorzusammensetzung nach einem der Ansprüche 1 bis 7 polymerisiert wird.

9. Als Diphosphine die Verbindungen: 2,2-Dimethyl-1,3-bis(2-methoxyphenyl,phenyl-phosphino)propan, 2,2-Dimethyl-1,3-bis[ di(2-methoxyphenyl)phosphino] propan und 2-(Diphenylphosphinomethyl)-3-(diphenyl-phosphino)propen-1.

## Patentansprüche (Patentansprüche für folgende(n) Vertragsstaat(en): ES)

1. Verfahren zur Herstellung von Katalysatorzusammensetzungen, dadurch gekennzeichnet, daß sie bereitet werden durch Vereinigen von
a) einer Palladiumverbindung,
b) einem Anion einer Säure mit einem pKa-Wert von kleiner als 6 und
c) einer Verbindung der allgemeinen Formel R₁R₂M₁-R₆-M₂R₃R₄, worin M₁ und M₂ gleiche oder verschiedene Elemente, ausgewählt aus der aus Arsen, Antimon, Phosphor und Stickstoff bestehenden Gruppe, darstellen, R₁, R₂, R₃ und R₄ gleiche oder verschiedene Kohlenwasserstoffgruppen bedeuten, die gegebenenfalls durch polare Gruppen substituiert sein können, und R₆ eine zweiwertige Brückengruppe bezeichnet, worin die Brücke nur 3 Kohlenstoffatome enthält, deren mittleres Kohlenstoffatom Teil einer -CR₇R₈-Gruppe ist, worin R₇ und R₈ gleiche oder verschiedene einwertige, ausschließlich Kohlenstoff, Wasserstoff und gegebenenfalls Sauerstoff umfassende Substituenten sind.

2. Verfahren nach Anspruch 1, dadurch gekennzeichnet, daß in der Komponente c) M₁ und M₂ jeweils Phosphor bedeuten.

3. Verfahren nach Anspruch 1 oder 2, dadurch gekennzeichnet, daß wenigstens eine der in Komponente c) vorliegenden Gruppen R₁, R₂, R₃ und R₄ eine wenigstens einen polaren Substituenten tragende Phenylgruppe ist.

4. Verfahren nach Anspruch 3, dadurch gekennzeichnet, daß die polare Gruppe eine Alkoxygruppe ist.

5. Verfahren nach einem oder mehreren der Ansprüche 1 bis 4, dadurch gekennzeichnet, daß die in der Komponente c) vorliegenden Substituenten R₇ und R₈ Alkylgruppen, vorzugsweise Methylgruppen, sind.

6. Verfahren nach Anspruch 5, dadurch gekennzeichnet, daß die Komponente c) ein Diphosphin ist, ausgewählt aus der aus 2,2-Dimethyl-1,3-bis(diphenylphosphino)propan, 2,2-Dimethyl-1,3-bis(2-methoxyphenyl,phenyl-phospino)propan und 2,2-Dimethyl-1,3-bis[ di(2-methoxyphenyl)phosphino] propan bestehenden Gruppe.

7. Verfahren nach einem oder mehreren der Ansprüche 1 bis 6, dadurch gekennzeichnet, daß ein 1,4-Chinon als eine weitere Komponenten d) verwendet wird.

8. Verfahren zur Herstellung von Polymeren, dadurch gekennzeichnet, daß ein Gemisch aus Kohlenmonoxid mit einer oder mit mehreren olefinisch ungesättigten organischen Verbindungen unter Verwendung einer nach einem Verfahren gemäß einem oder mehreren der Ansprüche 1 bis 7 hergestellten Katalysatorzusammensetzung polymerisiert wird.

9. Verfahren zur Herstellung von Diphosphinen, dadurch gekennzeichnet, daß 2,2-Dimethyl-1,3-bis(2-methoxyphenyl,phenyl-phosphino)propan durch Umsetzen eines 1,3-Dihalogen-2,2-dimethylpropans mit einem Alkalimetall-2-methoxyphenyl, phenyl-phosphid, 2,2-Dimethyl-1,3-bis[di(2-methoxyphenyl)phosphino] propan durch Umsetzen eines 1,3-Dihalogen-2,2-dimethylpropans mit einem Alkalimetall-di(2-methoxyphenyl)phosphid hergestellt wird oder 2-(Diphenylphosphinomethyl)-3-(diphenyl-phosphino)propen-1 durch Umsetzen von 2-Chlormethyl-3-chlor-propen-1 mit einem Alkalimetalldiphenylphosphid hergestellt wird.

## Revendications (Revendications pour l'(les) Etat(s) contractant(s) suivant(s): AT, BE, CH, DE, FR, GB, GR, IT, LI, NL, SE)

1. Nouvelles compositions catalytiques, caractérisées en ce qu'elles sont à base de
a) un composé du palladium,
b) un anion d'un acide d'un pKa de moins de 6, et
c) un composé de la formule générale R₁R₂M₁-R₆-M₂R₃R₄, dans laquelle M₁ et M₂ représentent des éléments identiques ou différents choisis dans le groupe constitué par l'arsenic, l'antimoine, le phosphore et l'azote, R₁, R₂, R₃ et R₄ représentent des groupes d'hydrocarbures identiques ou différents qui peuvent éventuellement être substitués par des groupes polaires et R₆ est un groupe bivalent formant pont dans lequel le pont contient seulement trois atomes de carbone, dont l'atome de carbone central fait partie d'un groupe -CR₇R₈- dans lequel R₇ et R₈ sont des substituants monovalents identiques ou différents comprenant exclusivement du carbone, de l'hydrogène et éventuellement de l'oxygène.

2. Compositions catalytiques selon la revendication 1, caractérisées en ce que dans le constituant c) M₁ et M₂ représentent chacun du phosphore.

3. Compositions catalytiques selon la revendication 1 ou 2, caractérisées en ce qu'au moins un des groupes R₁, R₂, R₃ et R₄ présents dans le constituant c) est un groupe phényle portant au moins un substituant polaire.

4. Compositions catalytiques selon la revendication 3, caractérisées en ce que le groupe polaire est un groupe alcoxy.

5. Compositions catalytiques selon une ou plusieurs des revendications 1-4, caractérisées en ce que les substituants monovalents R₇ et R₈ présents dans le constituant c) sont des groupes alcoyle, de préférence des groupes méthyle.

6. Compositions catalytiques selon la revendication 5, caractérisées en ce que comme constituant c) elles comprennent une diphosphine choisie dans le groupe constitué par le 2,2-diméthyl-1,3-bis(diphényl-phosphino)propane, le 2,2-diméthyl-1,3-bis(2-méthoxy-phényl,phényl-phosphino)propane et le 2,2-diméthyl-1,3-bis(di(2-méthoxy-phényl)phosphino)propane.

7. Compositions catalytiques selon une ou plusieurs des revendications 1-6, caractérisées en ce qu'elles comprennent en outre une 1,4-quinone comme constituant d).

8. Procédé pour la préparation de polymères, caractérisé en ce qu'un mélange d'oxyde de carbone et d'un ou plusieurs composés organiques oléfiniquement insaturés est polymérisé en utilisant une composition catalytique selon l'une quelconque des revendications 1-7.

9. Comme diphosphines :
le 2,2-diméthyl-1,3-bis(2-méthoxy-phényl,phényl-phosphino)propane,
le 2,2-diméthyl-1,3-bis(di(2-méthoxy-phényl)phosphino)propane et
le 2-(diphényl-phosphino-méthyl)-1-(diphényl-phosphino)propène-1.

## Revendications (Revendications pour l'(les) Etat(s) contractant(s) suivant(s): ES)

1. Un procédé pour la préparation de compositions catalytiques, caractérisé en ce qu'on les prépare en combinant
a) un composé du palladium,
b) un anion d'un acide d'un pKa de moins de 6, et
c) un composé de la formule générale R₁R₂M₁-R₆-M₂R₃R₄, dans laquelle M₁ et M₂ représentent des éléments identiques ou différents choisis dans le groupe constitué par l'arsenic, l'antimoine, le phosphore et l'azote, R₁, R₂, R₃ et R₄ représentent des groupes d'hydrocarbures identiques ou différents qui peuvent éventuellement être substitués par des groupes polaires et R₈ est un groupe bivalent formant pont dans lequel le pont contient seulement trois atomes de carbone, dont l'atome de carbone central fait partie d'un groupe -CR₇R₈- dans lequel R₇ et R₈ sont des substituants monovalents identiques ou différents comprenant exclusivement du carbone, de l'hydrogène et éventuellement de l'oxygène.

2. Un procédé selon la revendication 1, caractérisé en ce que dans le constituant c) M₁ et M₂ représentent chacun du phosphore.

3. Un procédé selon la revencication 1 ou 2, caractérisé en ce qu'au moins un des groupes R₁, R₂, R₃ et R₄ présents dans le constituant c) est un groupe phényle portant au moins un substituant polaire.

4. Un procédé selon la revendication 3, caractérisé en ce que le groupe polaire est un groupe alcoxy.

5. Un procédé selon une ou plusieurs des revendications 1-4, caractérisé en ce que les substituants monovalents R₇ et R₈ présents dans le constituant c) sont des groupes alcoyle, de préférence des groupes méthyle.

6. Un procédé selon la revendication 5, caractérizé en ce que le constituant c) est une diphosphine choisie dans le groupe constitué par le 2,2-diméthyl-1,3-bis(diphényl-phosphino)propane, le 2,2-diméthyl-1,3-bis(2-méthoxy-phényl,phényl-phosphino)propane et le 2_{,}2-diméthyl-1,3-bis(di(2-méthoxy-phényl)-phosphino) propane.

7. Un procédé selon une ou plusieurs des revendications 1-6, caractérisé en ce qu'une 1,4-quinone est utilisée comme constituant d) supplémentaire.

8. Procédé pour la préparation de polymères, caractérisé en ce qu'un mélange d'oxyde de carbone et d'un ou plusieurs composés organiques oléfiniquement insaturés est polymérisé en utilisant une composition catalytique préparée par un procédé selon une ou plusieurs des revendications 1-7.

9. Un procédé pour la préparation de diphosphines, caractérisé en ce que le 2,2-diméthyl-1,3-bis(2-méthoxy-phényl,phényl-phosphino)propane est préparé en faisant réagir un 1,3-dihalo-2,2-diméthyl-propane avec un 2-méthoxyphényl,phényl-phosphure de métal alcalin, ou on prépare le 2,2-diméthyl-1,3-bis(di(2-méthoxy-phényl)-phosphino)propane en faisant réagir un 1,3-dihalo-2,2-diméthylpropane avec un di(2-méthoxy-phényl)phosphure de métal alcalin ou on prépare le 2-(diphényl-phosphino-méthyl)-3-diphényl-phosphino)propène-1 en faisant réagir le 2-chlorométhyl-3-chloro-propène-1 avec un diphényl phosphure de métal alcalin.
